# DEMANDE DE BREVET EUROPEEN

(11) **EP 0 803 310 A1**
(43) Date de publication de la demande: **29.10.1997**
(21) Numéro de dépôt: 97400894.8
(22) Date de dépôt: 21.04.1997
(51) Int. Cl.: B23K 9/133

(54) **Dévidoir de bobine de fil à souder, en particulier de fil d'aluminium**

(30) Priorité: 23.04.1996 FR 9605114
(71) Demandeur: MIG WELD, 21600 Longvic (FR)
(72) Inventeur: Bagolin, Alain, 21380 Marsannay le Bois (FR)
(74) Mandataire: Desaix, Anne

(57) **Abrégé**

L'invention propose un dévidoir capable de fonctionner avec des bobines de fil à souder en aluminium pouvant atteindre des poids égal ou supérieur à 40 kg, avec un support de bobines de type écologique et des moyens d'entraînement permettant une avance de fil sans à-coup.

Le dévidoir (D) de bobine de fil à souder selon l'invention comprend des moyens motoréducteurs (M, 20) d'entraînement en rotation de la bobine (B), des portes d'entrée (1, 2), une paroi supérieure (7), deux parois latérales (4, 5) et un fond (3) s'étendant jusqu'à une paroi de fond (6) opposée à la face d'entrée et par où le fil (F) sort après avoir suivi un parcours donné. Le dévidoir comporte des moyens permettant de positionner le fond (3) selon deux positions correspondant à une position de charge et à une position de fonctionnement de la bobine. Des moyens de régulation de la vitesse de défilement du fil (F) comprennent une poulie mobile (15) portée par un arbre (18), dont l'axe mobile est monté dans un potentiomètre (19), et deux poulies (14, 16) d'axe fixe(14 à 16, 18), le fil (F) faisant un tour des poulies. Le potentiomètre règle alors la vitesse de défilement du fil en fonction de la position du bras porteur (18).

Application : soudage automatique ou semi-automatique.

## Description

L'invention se rapporte au domaine de la soudure industrielle automatique ou semi-automatique, et plus particulièrement à l'alimentation en fil pour les postes de soudage de tôles en alliage à base d'aluminium, par exemple destinées à la fabrication de bennes de camion ou de wagons à partir de profilés en aluminium. L'invention s'applique préférentiellement, mais non exclusivement, à l'alimentation en fil d'aluminium apte à la soudure de tels profilés.

Pour obtenir un fil d'aluminium apte à la soudure, le fil brut, constitué d'aluminium ou d'alliage d'aluminium, subit des opérations de tréfilage, de recuit, de décapage de la surface par usinage dite "rasage". Le fil est alors conditionné par enroulement sur des supports, généralement en plastique, de manière à former des bobines de quelques kilogrammes. Classiquement, sont utilisées des bobines de diamètre égal à 300 mm, et pesant 6 ou 7 kg.

Dans l'art connu, la bobine est installée dans le dévidoir, intégré au générateur de courant ou distinct, comprenant un axe avec un système de freinage par friction pour recevoir la bobine et un ensemble de galets motorisés, ayant pour fonction de pousser le fil dans une gaine en téflon jusqu'au pistolet de soudage tenu par le soudeur ou installé sur une machine automatique ou robot. L'avance du fil se fait par une gâchette située sur le pistolet qui électroniquement commande le moteur de dévidage. La vitesse du fil varie de 0 à 15 m/min en général.

Le soudage est réalisé par la formation d'un arc électrique entre l'extrémité du fil maintenu par un tube de contact disposé dans le pistolet et les profilés à souder. Une tension électrique adaptée, généralement continue, est établie entre le tube de contact et les profilés à partir d'un générateur de courant redressé. Afin d'améliorer la qualité de la soudure, un gaz d'argon est classiquement amené par une gaine coaxiale ou parallèle à la gaine de téflon pour effectuer la soudure sous atmosphère parallèle à la gaine de téflon pour effectuer la soudure sous atmosphère inerte. Un système de circulation d'eau peut éventuellement être prévu pour refroidir le pistolet.

Dans ces procédés de soudage, la régularité et la qualité des soudures dépendent d'abord de l'arrivée, au niveau du tube de contact, d'un fil de courbure faible et régulière et animé d'une vitesse aussi constante que possible. L'entraînement du fil doit donc être sans glissement sur les galets, et l'arrêt du fil doit pouvoir être réalisé de manière quasi-instantanée.

Pour des utilisations en soudage automatique ou robotisé, des conditionnements, supérieurs à 6 kg, s'avèrent nécessaires afin de diminuer les temps d'arrêt et gagner en productivité. Ces besoins croissants en conditionnement sont récents et générés par l'arrivée de l'aluminium dans le secteur automobile par exemple. Or l'aluminium, mou et sans raideur, ne facilite pas l'augmentation de la capacité des conditionnements.

Afin de faire face à ces difficultés, il a été proposé d'utiliser des bobines de capacité adaptée à la durée de fonctionnement continue d'un poste de soudage actuel, dont certains organes doivent être remplacés périodiquement (le tube en téflon par exemple). Des bobines de 40 kg répondent à ce besoin. Pour mettre en oeuvre de telles bobines, qui ne doivent pas être soulevées et ne peuvent pas être engagées dans les dévidoirs classiques, il a été prévu de les déposer sur des rouleaux rotatifs disposés au sol et d'introduire le fil dans le dévidoir classique par l'intermédiaire d'un levier à ressort couplé à une poulie. Ce système pose de nombreux problèmes :
- les bords des flasques de la bobine doivent être et rester aussi parfaits que possible, afin que l'entraînement en rotation ne provoque pas de brusques variations en tension mécanique pouvant avoir de graves conséquences sur la tenue du fil et donc sur la qualité de la soudure ;
- l'impossibilité d'utiliser des supports de bobine "écologique" en fil d'acier ou d'aluminium plié et soudé, qui seraient déformés par un tel traitement ;
- l'utilisation d'un couplage bras à ressort/poulie qui ne permet pas d'amortir correctement la phase de démarrage du défilement du fil, entraînant la détente du fil pouvant être suivie de brusques surtensions mécaniques.

L'invention vise à résoudre ces problèmes en proposant un dévidoir capable de fonctionner avec des bobines pouvant atteindre un poids très supérieur aux poids classiquement utilisés, par exemple égal ou supérieur à 40 kg, le matériau du support de ces bobines pouvant être de type écologique (par exemple en fil d'acier) et le dévidoir étant équipé de moyens d'entraînement du fil à souder pouvant fonctionner sans galet et permettant une avance de fil sans à-coup et sans endommagement de la surface par écrasement.

Pour atteindre ces objectifs tout en restant dans des gammes de coût raisonnable, l'invention repose sur une mise en place de la bobine par un plan variable pour l'élever jusqu'à un axe de rotation, et sur l'adaptation d'un entraînement motorisé de cet axe avec une régulation électro-mécanique en fonction de la vitesse de défilement du fil, une fois la bobine mise en place.

Plus précisément, l'invention a pour objet un dévidoir de bobine de fil à souder présentant un axe central, comprenant des moyens d'entraînement en rotation de la bobine selon un axe de rotation, une face d'entrée, une paroi supérieure, deux parois latérales et un fond s'étendant jusqu'à une paroi de fond opposée à la face d'entrée et par où le fil sort après avoir suivi un parcours donné, le dévidoir étant caractérisé en ce que des moyens permettent de positionner le fond selon deux positions correspondant à une position de charge de la bobine (B) et à une position de fonctionnement de la bobine, en ce que l'axe de rotation des moyens d'entraînement en rotation est positionné de manière à coïncider avec l'axe de la bobine reposant sur le fond, et en ce que lesdits moyens d'entraînement en rotation comportent des moyens motoréducteurs de vitesse de rotation couplé à des moyens de régulation électro-mécanique situés sur le parcours du fil à souder.

Dans un mode de réalisation préférentiel, la face d'entrée présente une porte d'entrée basculante autour d'un axe parallèle à l'axe de rotation de la bobine, et les moyens de positionnement du fond sont constitués par un renvoi de la porte d'entrée, le fond présentant une pente inclinée en remontant vers ladite paroi de fond opposée lorsque la porte d'entrée est fermée, et est soulevé par le renvoi lorsque la porte d'entrée basculante s'ouvre, jusqu'à atteindre une position horizontale sensiblement perpendiculaire à la paroi de fond opposée à la porte d'entrée, la porte d'entrée en position ouverte présentant une paroi intérieure formant un plan incliné venant s'articuler sur le fond en position horizontale.

Selon une caractéristique préférée, les moyens de régulation mobiles sont constitués par une poulie mobile, montée sur une extrémité de bras dont l'autre extrémité peut tourner autour d'un axe, couplée à une double poulie constituée d'une première et d'une seconde poulie indépendantes montées sur un même axe fixe, de sorte que le fil fasse un tour en passant de ladite première poulie à la poulie mobile, puis en revenant sur ladite seconde poulie avant de sortir par le côté opposé. Une telle disposition permet de s'adapter aux variations de vitesse d'avance du fil en phase de démarrage, en cours d'opération ou d'arrêt par variation de position de la poulie mobile en hauteur de sorte que le fil conserve une tension mécanique égale.

Avantageusement, la course de la poulie mobile est limitée par des butées pour empêcher cette poulie de heurter d'autres éléments du dévidoir en cas de variation trop brutale de la vitesse de défilement du fil.

Selon une autre caractéristique, les moyens motoréducteurs sont constitués par un moteur alternatif à bloc réducteur, par exemple à roue et vis sans fin, présentant un arbre de rotation traversant une paroi latérale et couplé à un variateur de vitesse à fréquence variable réglée sur un potentiomètre, monté sur la face interne de la paroi de fond, par exemple à l'aide de moyens aptes à absorber les torsions. Le potentiomètre est monté de sorte que son axe soit l'axe de rotation du bras de la poulie mobile (ou solidaire de celui-ci). Après calibrage, le potentiomètre peut alors commander la tension du motoréducteur pour régler la vitesse de défilement du fil en fonction de la position de la poulie mobile.

Une caractéristique avantageuse consiste à prévoir un porte-palier, disposée sur la paroi latérale opposée à la paroi latérale du motoréducteur, présentant une ouverture dont l'accès est verrouillé, par exemple par un clipsage, après avoir logé au creux du porte-palier un embout d'arbre de centrage solidaire d'un centreur fixé au support de la bobine, et déplacé la bobine selon son axe en direction du motoréducteur, pour coupler l'arbre du motoréducteur solidaire de l'autre centreur audit arbre de centrage et les centreurs entre eux.

Selon une autre caractéristique avantageuse, des moyens d'alerte, visuel ou sonore, sont prévus pour avertir un opérateur que la fin de bobinage du fil est proche. A cette fin, des moyens capteurs, comprenant par exemple une cellule photoélectrique, sont prévus dans le dévidoir à un emplacement adapté.

Avantageusement, une porte supérieure est prévue sur la face d'entrée du dévidoir et la porte d'entrée, une fois rabattue, est disposée à l'intérieur du dévidoir par rapport à la porte supérieure qui la recouvre partiellement. Un contacteur électrique peut être disposé entre les portes de la face d'entrée afin de couper les moyens d'alerte et déverrouiller le motoréducteur, une fois le dévidoir rechargé à l'aide d'une nouvelle bobine.

Selon un mode de mise en oeuvre préféré du dévidoir selon l'invention, le support de la bobine est de type écologique, formé de deux cerceaux reliés par des berceaux en fil d'acier ou aluminium.

D'autres avantages et caractéristiques apparaîtront à la lecture qui suit exposant un mode de réalisation détaillé selon l'invention, en référence aux figures annexées qui représentent, respectivement :
- la figure 1, une vue globale d'un exemple de réalisation de dévidoir selon l'invention prêt à fonctionner ;
- la figure 2, une vue latérale schématique du dévidoir, avec arrachement de la paroi latérale et indication des deux positions extrêmes de la porte d'entrée ;
- la figure 3, une vue schématique partielle de la bobine et de ses moyens de fixation en position de fonctionnement, en coupe partielle selon un plan parallèle à la face d'entrée et passant par l'axe central du support de la bobine ;
- la figure 4, une vue du porte-palier support de l'arbre de centrage de la bobine.

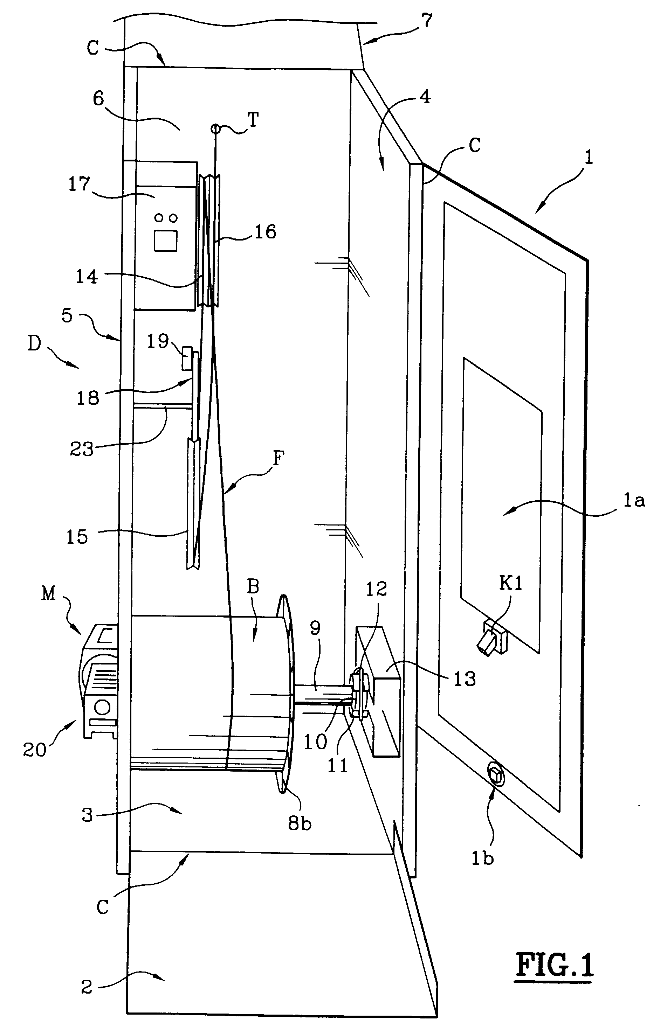

Sur la figure 1, le dévidoir D présenté est prêt à fonctionner. Il comporte: une face avant composée d'une porte supérieure 1, dans laquelle a été découpée une fenêtre 1a, et d'une porte d'entrée 2, les deux portes étant présentées ouvertes; un fond 3; deux parois latérales fixes 4 et 5; une paroi de fond fixe 6, et une paroi supérieure ouverte 7. Un contacteur électrique 1b et un composant K1 d'une cellule photoélectrique sont disposés sur la porte supérieure 1. La fonction de ces éléments est décrite plus loin. Les portes et paroi mobiles sont articulées autour de charnières C.

A l'extérieur du dévidoir, il apparaît, fixé sur la paroi latérale 5, un motoréducteur M équipé d'un arbre de rotation entraîné par un bloc de réduction 20 à vis sans fin, et alimenté par une tension alternative 220 V triphasée. Ce mode d'entraînement présente l'avantage d'obtenir des arrêts de bobine de grande précision, la bobine ne pouvant entraîner par l'effet d'inertie le moteur.

A l'intérieur du dévidoir, sont disposés la bobine B de fil d'aluminium, enroulée sur son support dont seul un cerclage 8b est visible, l'arbre de centrage 9 dont un embout 10 est logé dans un porte-palier 11 verrouillé par un clipsage 12 et porté par un support 13.

Le fil de soudage F passe sur les gorges d'une première poulie 14 d'axe fixe, d'une seconde poulie mobile 15, puis d'une troisième poulie 16, les poulies 14 et 16, coaxiales et indépendantes, forment une double poulie. Le fil traverse ensuite la paroi de fond 6 à travers un trou T.

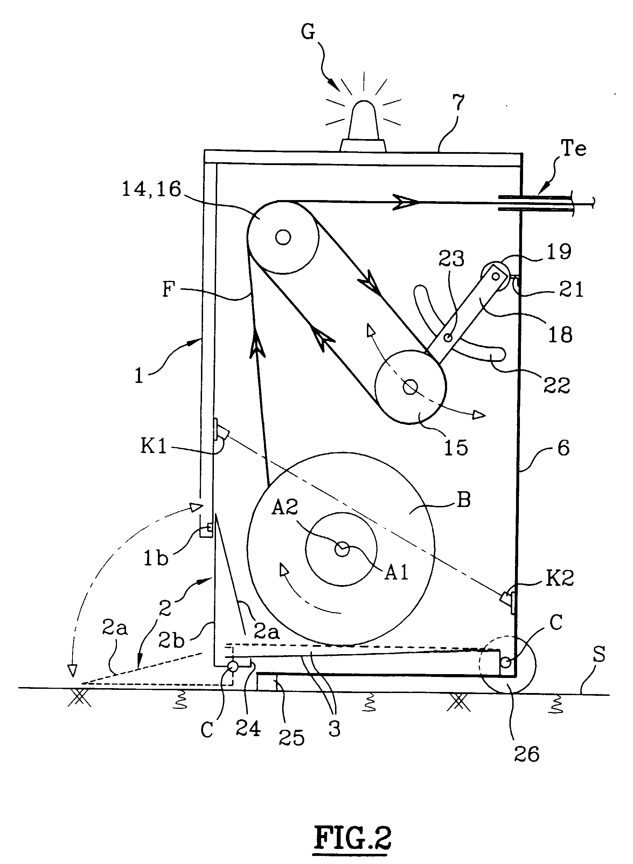

La double poulie est portée par le boîtier de commande marche/arrêt 17 du motoréducteur M. La poulie mobile 16 est portée par les fourches d'un bras mobile 18 pouvant tourner autour de l'axe d'un potentiomètre 19 fixé à la paroi de fond 6. La fixation peut être réalisée par tout moyen apte à subir une torsion sans déformer la paroi 5 du dévidoir. Une simple équerre de fixation 21 (représentée en figure 2) peut suffire.

Le potentiomètre 19 règle, après calibrage, la vitesse de défilement du fil en fonction de la position de la poulie mobile 16 par commande en tension et fréquence du bloc réducteur de vitesse 20 du motoréducteur M. La vitesse de défilement peut ainsi être régulée sur une position optimale de la poulie de régulation.

Sur la figure 2, qui est une vue latérale schématique du dévidoir dans le plan de la paroi 4, les organes déjà présentés ont conservé les mêmes signes de référence. Le fil F est gainé par un tuyau de téflon Te en sortie du dévidoir, après avoir parcouru un tour entre les différentes poulies, 14 à 16. La course du bras mobile est avantageusement limitée par un guide 22 limité par deux butées, et dans lequel se déplace un plot 23 solidaire du bras mobile.

La porte d'entrée 2 et le fond 3 sont représentés en traits pleins lorsque la porte d'entrée est fermée, et en traits pointillés lorsque la porte d'entrée est en position totalement ouverte. La porte d'entrée comporte une paroi intérieure 2a inclinée par rapport à sa paroi externe 2b, en position verticale lorsque la porte est fermée, et un renvoi d'angle 24.

En position fermée (ou rabattue), la porte 2 est partiellement recouverte par la porte supérieure 1, dont le contacteur 1b touche la paroi externe 2b de la porte d'entrée. Dans cette position, le renvoi d'angle 24 n'applique aucune force sur le fond incliné 3 et l'axe de rotation A1 du support de la bobine B est à une distance du fond 3 supérieure au diamètre du support de la bobine.

En position totalement ouverte, la paroi interne 2a de la porte d'entrée sert de plan incliné pour faire pénétrer une nouvelle bobine dans le dévidoir. En ouvrant cette porte 2, le renvoi 24 est calculé pour relever une extrémité du fond 3 articulé à son autre extrémité autour d'une charnière C, jusqu'à la position horizontale coïncidant avec la position totalement ouverte de la porte d'entrée. Le dévidoir comporte des pieds 25 et des roues 26 dont les distance au sol S sont calculées, ou peuvent être réglées, afin d'obtenir l'inclinaison souhaitée de la paroi interne 2a en position totalement ouverte.

Dans cette position, extrémité de cette paroi interne 2a vient s'aligner sur extrémité redressée du fond 3. La nouvelle bobine peut alors pénétrée dans le dévidoir en reposant sur un fond horizontal. L'axe de rotation A2 de l'arbre d'entraînement du motoréducteur se trouvant à une distance du fond 3 égale au diamètre du support de la bobine B, la bobine B est roulée jusqu'à la position où les axes de rotation A1 et A2 viennent en coïncidence. La bobine est alors fixée sur l'arbre d'entraînement selon une procédure détaillée plus loin. La porte d'entrée 2 est ensuite rabattue, si bien que le fond 3 s'incline de nouveau et ne porte plus la bobine: la bobine est mise en position de fonctionnement sans avoir été soulevée. Le dévidoir peut alors préférentiellement être utilisé avec des bobines de 40 kg de fil d'aluminium dans des supports « écologiques » en fil d'acier ou d'aluminium, sans que l'état des cerceaux intervienne dans la qualité de la rotation de la bobine, et donc dans la constance de la vitesse de défilement du fil.

Des moyens d'alerte visuel ou sonore, par exemple un gyrophare G dans l'exemple de réalisation, sont prévus pour avertir un opérateur que la fin de bobinage du fil est proche. A cette fin, des moyens capteurs sont prévus dans le dévidoir à un emplacement adapté. Par exemple, les composants K1 et K2 d'une cellule photoélectrique, sont disposés sur la porte supérieure 1 et sur la paroi de fond 6 et orientés de sorte que le faisceau lumineux (représenté en traits mixtes) ne soit plus interrompu par la bobine lorsqu'il ne reste plus qu'une très faible couche de fil. Le contacteur électrique 1b ,disposé entre les portes de la face d'entrée, coupe les moyens d'alerte et déverrouille la commande du motoréducteur, une fois le dévidoir rechargé à l'aide d'une nouvelle bobine.

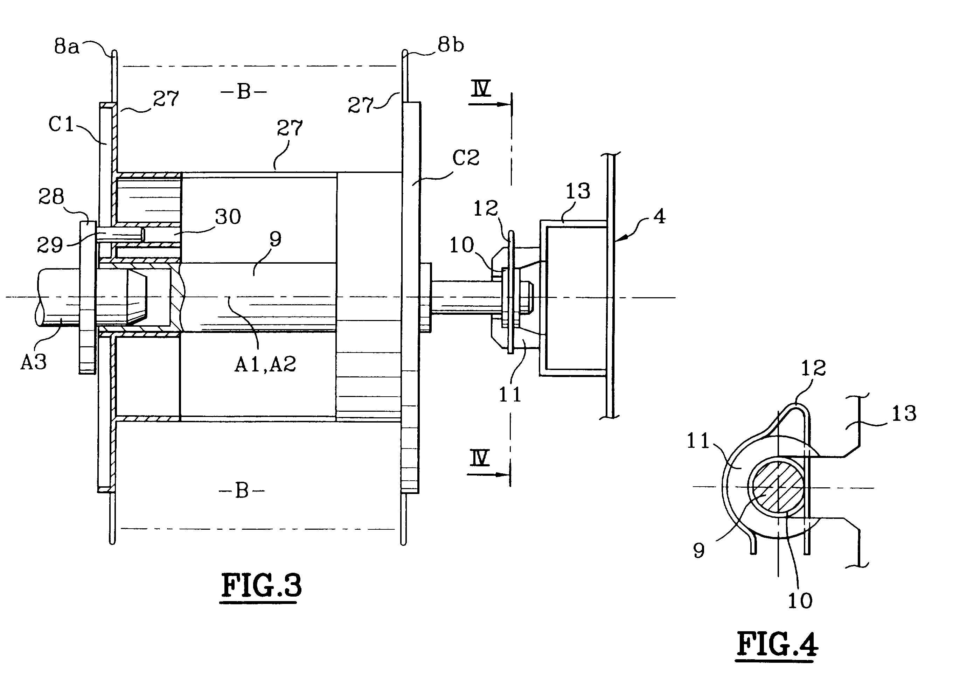

La figure 3 représente, en vue partielle, la bobine B en position de fonctionnement sur son support composé de deux cerclages 8a et 8b et de berceaux 27. Le support est équipé de deux centreurs, C1 et C2, traversés par un arbre de centrage 9 s'étendant, du côté de la paroi latérale 4, par une partie de plus faible diamètre terminée par l'embout 10. L'embout 10 vient s'encastrer dans une partie complémentaire du porte-palier 11 verrouillé par le clipsage 12 et porté par le support 13

La figure 4 montre plus précisément en vue latérale, le porte-palier 11 en forme de U porté par le support 13, et dans lequel vient se loger l'embout 10 de la partie d'arbre de plus petit diamètre.

Du côté de la paroi latérale 5, la figure 3 montre, dans une coupe partielle selon un plan parallèle à la face d'entrée du dévidoir D et passant par l'axe de rotation A2, le couplage entre l'arbre de centrage 9 et l'arbre de rotation A3 du motoréducteur. Ce couplage est réalisé par une connexion mâle/femelle, l'arbre de centrage présentant un trou borgne dans lequel vient s'enficher l'arbre de rotation A3. Un plateau 28, solidaire de l'arbre A3 et présentant un doigt 29 venant s'enficher dans une encoche 30 réalisée dans le centreur C1, est également prévu afin de parfaire l'entraînement de la bobine par l'arbre de rotation A3.

La procédure de mise en place d'une nouvelle bobine sur l'axe de rotation du motoréducteur suit préférentiellement les étapes suivantes:
- rendre solidaire un centreur C2 et l'arbre de centrage 9, et mise en place de l'ensemble dans et sur le flanc du support de bobine, le centreur présentant des rainures adaptées pour venir se connecter aux berceaux de ce support ;
- rouler la bobine jusqu'à ce que l'extrémité de diamètre diminué de l'arbre de centrage 9 vienne se loger dans le porte-palier 11 ;
- déplacer latéralement, au besoin à l'aide d'un levier prenant appui au niveau de l'axe de la bobine A2, la bobine B pour que l'arbre de rotation A3 du motoréducteur vienne s'enclencher sur l'arbre de centrage 9, le doigt 29 du plateau 28 venant parallèlement s'enficher dans l'encoche 30 du centreur et l'embout 10 venant s'encastrer dans le porte-palier 11 ;
- verrouiller le porte-palier 11, par clipsage dans l'exemple de réalisation illustré.

L'invention n'est pas limitée à l'exemple de réalisation décrit et illustré. Il est par exemple possible d'utiliser, à la place des moyens mécaniques décrits, d'autres moyens de régulation de la vitesse de défilement du fil, par exemple basés sur des moyens de variation adaptés de la position d'un support du fil pouvant se déplacer à partir d'une mesure de la tension du fil.

D'autre part, il est possible d'adapter d'autres moyens que ceux décrits, par exemple des moyens à commande électrique, pour faire pivoter ou remonter/descendre le fond du dévidoir entre deux positions. Il est possible également de réaliser des variantes à partir de l'exemple décrit, par exemple en prévoyant plusieurs « tours » de fil entre des poulies fixes et des poulies mobiles afin de temporiser davantage les variations de vitesse de défilement. Par ailleurs, le verrouillage du porte-palier peut être réalisé par tout moyen connu de l'homme de l'art.

De plus il est possible de prévoir l'utilisation de moyens de chauffage , par exemple par convection, afin de sécher les bobines avant utilisation. Une régulation thermique peut également être prévue.

## Revendications

1. Dévidoir de bobine de fil à souder présentant un axe central (A1), comprenant des moyens d'entraînement en rotation (9) de la bobine selon un axe de rotation (A2), une face d'entrée, une paroi supérieure (7), deux parois latérales (4, 5) et un fond (3) s'étendant jusqu'à une paroi de fond (6) opposée à la face d'entrée et par où le fil (F) sort après avoir suivi un parcours donné, le dévidoir étant caractérisé en ce que des moyens permettent de positionner le fond (3) selon deux positions correspondant à une position de charge de la bobine (B) et à une position de fonctionnement de la bobine, en ce que l'axe de rotation (A2) des moyens d'entraînement en rotation (9) est positionné de manière à coïncider avec l'axe (A1) de la bobine reposant sur le fond (3), et en ce que lesdits moyens d'entraînement en rotation (9) comportent des moyens motoréducteurs de vitesse de rotation couplé à des moyens de régulation (14 à 16, 18) situés sur le parcours du fil à souder.

2. Dévidoir selon la revendication 1, caractérisé en ce que la face d'entrée présente une porte d'entrée (2) basculante autour d'un axe parallèle à l'axe de rotation (A1) de la bobine (B), et en ce que les moyens de positionnement du fond sont constitués par un renvoi (24) de la porte d'entrée, le fond (3) présentant une pente inclinée en remontant vers ladite paroi de fond (6) lorsque la porte d'entrée (2) est fermée, et est soulevé par le renvoi (24) lorsque la porte d'entrée basculante (2) s'ouvre, jusqu'à atteindre une position horizontale sensiblement perpendiculaire à la paroi de fond (6) opposée à la face d'entrée, la porte d'entrée (2) en position ouverte présentant une paroi intérieure (2a) formant un plan incliné venant s'articuler sur le fond (3) en position horizontale.

3. Dévidoir selon l'une des revendications 1 ou 2, caractérisé en ce que les moyens de régulation mobiles sont constitués par une poulie mobile (15) montée sur une extrémité de bras (18) dont l'autre extrémité peut tourner autour d'un axe, couplée à une double poulie constituée d'une première (14) et d'une seconde poulie (16) indépendantes montées sur un même axe fixe, de sorte que le fil (F) fasse un tour en passant de ladite première poulie (14) à la poulie mobile (15), puis en revenant sur ladite seconde poulie (16) avant de sortir par le côté opposé (6).

4. Dévidoir selon la revendication 3, caractérisé en ce que les moyens motoréducteurs sont constitués par un moteur alternatif (M) présentant un arbre de rotation (A3) traversant une paroi latérale (5) et couplé à un variateur de vitesse à fréquence variable (20) réglée sur un potentiomètre (19) monté sur la face interne de la paroi de fond (6) de sorte que son axe soit solidaire de l'axe de rotation du bras (18) de la poulie mobile (15).

5. Dévidoir selon la revendication 3, caractérisé en ce la course de la poulie mobile (15) est limitée par des butées (22) pour empêcher cette poulie de heurter d'autres éléments du dévidoir en cas de variation brutale de la vitesse de défilement du fil (F).

6. Dévidoir selon l'une des revendications précédentes, caractérisé en ce qu'il est prévu un porte-palier (11), disposée sur la paroi latérale (4) opposée à la paroi latérale (5) du motoréducteur (M) et présentant une ouverture dont l'accès est verrouillé après avoir logé un embout (10) d'arbre de centrage (9) solidaire d'un centreur (C2) fixé au support de la bobine, et déplacé la bobine selon son axe (A1) en direction du motoréducteur (M), pour coupler l'arbre du motoréducteur (A3) solidaire d'un autre centreur (C1) audit arbre de centrage (9) et les centreurs (C1, C2) entre eux.

7. Dévidoir selon l'une des revendications précédentes, caractérisé en ce que des moyens d'alerte (G) sont prévus pour avertir que la fin de bobinage du fil est proche, ces moyens étant couplés à des moyens capteurs de fin de bobine disposés dans le dévidoir à un emplacement adapté.

8. Dévidoir selon la revendication 7, caractérisé en ce que les moyens capteurs sont constitués par des composants (K1, K2) d'une cellule photoélectrique.

9. Dévidoir selon la revendication 7, caractérisé en ce qu'une porte supérieure (1) est prévue sur la face d'entrée du dévidoir (D), la porte d'entrée (2), une fois rabattue, étant disposée à l'intérieur du dévidoir par rapport à la porte supérieure (1) qui la recouvre partiellement, et en ce qu'un contacteur électrique (1b) est disposé entre les portes (1, 2) de la face d'entrée, afin de couper les moyens d'alerte (G) et déverrouiller le motoréducteur, une fois le dévidoir rechargé à l'aide d'une nouvelle bobine.

10. Dévidoir selon l'une des revendications précédentes, caractérisé en ce que le support de la bobine (B) est de type écologique, formé de deux cerceaux reliés par des berceaux en fil d'acier ou aluminium.
